# EUROPEAN PATENT APPLICATION

(11) **EP 4 714 755 A1**
(43) Date of publication of application: **25.03.2026**
(21) Application number: 24201317.5
(22) Date of filing: 19.09.2024
(51) Int. Cl.: B60R 21/013, B60Q 1/26, B60R 25/20, B60R 21/015, B60R 1/12

(54) **REAR-VIEW DEVICE FOR A VEHICLE**

(71) Applicant: Volvo Car Corporation, 405 31 Göteborg (SE)
(72) Inventor: HERMANSSON, Joakim, 40531 Göteborg (SE)
(74) Representative: Maiwald GmbH

(57) **Abstract**

The disclosure relates to a rear-view device (10) for a vehicle (100), the rear-view device (10) comprising an indication unit (20) configured for a first vehicle function (F 1), the first vehicle function (F1) being to indicate a situation in an environment of the vehicle (100) provided by a driver information system (40) of the vehicle (100), wherein the indication unit (20) is further configured for a second vehicle function (F2) different from the first vehicle function (F1).

## Description

### TECHNICAL FIELD

The present disclosure relates to a rear-view device and a vehicle.

### BACKGROUND ART

Modern vehicles may be equipped with different systems such as, for example, a blind spot information system, an anti-theft system, and so on. Typically, all systems provide the indication of their function independent from one another. For example, an activated alarm indication of an anti-theft system is provided independent from a blind spot indication of a blind spot information system. Also, the indications are typically given by different indication units at different locations of the vehicle. Hence, at each location, a separate indication mechanism, such as an indicator light, is used.

Due to the number of different systems that modern vehicles may be equipped with, the number of indication mechanisms may not only be costly when manufacturing the vehicles but also result in a large cluster of different indication mechanisms, which may be difficult to observe by a user or driver of the vehicle.

### SUMMARY

The problem is at least partially solved or alleviated by the subject matter of the independent claims of the present disclosure, wherein further examples are incorporated in the dependent claims.

According to a first aspect, there is provided a rear-view device for a vehicle. The rear-view device may be comprising an indication unit. The indication unit may be configured for a first vehicle function. The first vehicle function may be to indicate a situation in an environment of the vehicle provided by a driver information system of the vehicle. The indication unit may be further configured for a second vehicle function different from the first vehicle function.

Advantageously, the rear-view device may accordingly use a single indication unit for two different vehicle functions, namely a first vehicle function and a second vehicle function. Hence, two different systems of the vehicle with their own separate vehicle functions may be using a single indication unit on the rear-view device to provide indications relating to the vehicle functions that these systems are providing. The indications may in particular be configured as indications for a user or a driver of the vehicle. Specifically, having the indication unit on a rear-view device enables the user, in particular driver, of the vehicle to notice the indication quickly because of the rear-view device's safety relevance and its typically prominent position at the vehicle such that it is regularly observed by the driver.

A rear-view device as described herein is to be understood as any device of the vehicle providing a rear-view, in particular for a user or driver of the vehicle from inside a cabin of the vehicle. The rear-view device may generally be positioned inside the cabin of the vehicle, i.e., be an interior device, or the rear-view device may be positioned outside of the cabin of the vehicle, i.e., be an exterior device. The rear-view device may in particular comprise a mirror and hence be, for example, an interior mirror or exterior mirror. Alternatively, or additionally, the rear-view device may comprise a display for displaying a picture or video of a rear-view captured by one or more cameras of the vehicle.

The indication unit as described herein is to be understood as any unit capable of providing an indication. For example, but not limited hereto, the indication unit may be any of a light unit, a display unit, and similar.

The first vehicle function may be a function executed or useful during the driving of the vehicle. The first vehicle function may indicate a situation in an environment or, in other words, surrounding of the vehicle as provided by a driver information system. Hence, the driver information system may inform the driver about one or more situations in the environment, which may be safety relevant for the driving.

The second vehicle function is different from the first vehicle function. Specifically, the second vehicle function may be from a different system than the first vehicle function. The second vehicle function may be configured to indicate a different situation or generally something different from a situation in an environment, e.g., a state of the vehicle. In particular, the first vehicle function may be depending on a driving state of the vehicle, in particular be only active or used during driving of the vehicle. Particularly, the second vehicle function may be to indicate a condition or state of a system of the vehicle. For example, the second vehicle function may be depending on a standstill state of the vehicle, in particular be active during standstill of the vehicle only. Accordingly, the second vehicle function would not be used during a driving state of the vehicle. Standstill state may include the situations of a parked vehicle, an idling vehicle, and/or similar. When using the second vehicle function during standstill state of the vehicle, the second vehicle function may indicate states or conditions of the vehicle without conflicting with safety relevant indications during driving of the vehicle. Specifically, it may be avoided that too many indications are given to the user or driver of the vehicle, which may not be necessary during driving of the vehicle or not be relevant for the driving of the vehicle, e.g., an indication of an activated state of an anti-theft system of the vehicle. Still, the same indication unit may be used for both vehicle functions, in particular at different times depending on the state of the vehicle, namely driving state or standstill state.

According to an example, the driver information system may be a blind spot information system. The indicated situation of the first vehicle function may be that another road participant is in a blind spot of the rear-view device. Thereby, the safety during driving of the vehicle may be increased.

According to an example, the second vehicle function may be to indicate an activated state of an anti-theft system of the vehicle. Hence, the indication of the activated or, in other words, armed state of the anti-theft system, may be using the same indication unit as the driver information system, in particular the blind spot information system. Therefore, instead of providing a separate indication unit such as an indicator light, the indication unit that is already provided in the rear-view device to serve another function, namely the first vehicle function, is being utilized. Advantageously, this reduces manufacturing costs and reduces the clustering of the vehicle with different indication units at different positions. Also, it may be provided that the second vehicle function may only be used in the standstill state of the vehicle. Hence, a conflict with the first vehicle function during driving of the vehicle is prevented. Specifically, the user or driver of the vehicle will, even if the same indication, e.g., light color of an indication light, is being used, always be able to distinguish whether that indication is being used for the first vehicle function or the second vehicle function depending on whether the vehicle is driving or in motion, or the vehicle is in standstill.

According to an example, the activated state of the anti-theft system may include an activated alarm of the anti-theft system. Further, the indication unit may be configured to indicate the activated state of the anti-theft system when one or more doors of the vehicle are locked. The one or more doors of the vehicle being locked may be a condition to arm or, in other words, activate the alarm of the anti-theft system. Additionally, or alternatively, a further condition may be that the cabin of the vehicle is not being occupied by a person.

Generally, there may also be a third vehicle function, wherein the indication unit may also be configured for the third vehicle function. The third vehicle function may be different from the first vehicle function and the second vehicle function. The third vehicle function may be configured to indicate a situation in the environment of the vehicle similar to the first vehicle function or a state or condition of a system of the vehicle in a stillstand state of the vehicle similar to the second vehicle function, for example. Similarly, there may be a fourth vehicle function, fifth vehicle function and so on, for which the indication unit may be configured. Any one of the third, fourth, fifth and so on vehicle function may be to indicate any one or more of the following examples.

According to an example, the second vehicle function or a third vehicle function for which the indication unit is configured may be (configured) to indicate one or more of: a passenger location from a passenger detection system of the vehicle; a state of charge of a battery system of the vehicle; a driving range of the vehicle; or a proximity between an object and a vehicle door of the vehicle. For example, the passenger detection system may be detecting whether a passenger is located inside the cabin of the vehicle or is located outside of the cabin or vehicle. For example, the vehicle or a main user or driver of the vehicle may want to make sure that all passengers have left the cabin of the vehicle before locking the vehicle. Hence, providing an indication of the passenger location, e.g., that the cabin is not occupied or that the cabin is occupied, may be advantageous. When providing this indication on the rear-view device, e.g., an exterior rear-view device, the main user or driver of the vehicle may take notice of whether the cabin is still occupied or not very well even if they are outside the cabin by simply looking at the exterior rear-view device and the thereon provided indication. For example, one or more interior and/or exterior cameras of the passenger detection system of the vehicle may be used to detect passengers inside and/or outside the cabin and determine the passenger location. Additionally, or alternatively, a state of charge of a battery system of, for example, an electric vehicle, may be indicated by the indication unit. The state of charge may be determined or provided by a battery management system of the vehicle. Thereby, a user or driver of the vehicle may easily take notice of the state of charge. For example, if the user or driver of the vehicle is located outside of the vehicle and the indication is provided on an exterior rear-view device, the user or driver does not need to access the vehicle or look up the state of charge on a charging station. Instead, they may see the state of charge even at great distance when looking at the indication by the indication unit of the exterior rear-view device. Similarly, an indication of the driving range of the vehicle may be given. E.g., when the vehicle is equipped with an internal combustion engine or a fuel cell, the indication of the driving range may be given in terms of the fuel or hydrogen in a tank of the vehicle. The driving range may be determined or provided by a range determination system of the vehicle. Advantageously, both, the indication of the state of charge and driving range may be given during standstill of the vehicle, in particular during a charging or fueling operation. Additionally, or alternatively, a proximity between an object and a vehicle door of the vehicle may be indicated on the indication unit. The object may in particular be a static object during standstill of the vehicle. Such static object may for example be another vehicle, a wall, or similar. Thereby, when the vehicle is parked and a user wants to exit the vehicle, they may know about how close they are pushing the door towards the object when opening the door and without seeing the object. For this purpose, one or more exterior cameras or proximity sensors of a proximity system of the vehicle may be used to determine the proximity between the object and the vehicle door.

According to an example, the indication unit may be a light unit configured to emit a light associated with the first vehicle function (e.g., to indicate the situation in the environment of the vehicle) and/or to emit a light associated with the second vehicle function (e.g., to indicate the activated state of the anti-theft system and/or any one of the aforementioned examples as second vehicle function or additional third vehicle function, fourth vehicle function and so on depending on the number of implemented vehicle functions).

For example, the at least one light unit may be configured to provide the indication of a state of charge of the vehicle and/or the driving range of the vehicle by emitting a light with an intensity, flashing frequency, illumination area and/or color correlating with the state of charge and/or the driving range state of the vehicle. Accordingly, a user may at least approximately become aware of the charging level and/or driving range by judging the intensity, flashing frequency, illumination area and/or color of the emitted light. For example, the intensity of the light may be low to high, with a low intensity light indicating a low state of charge and/or driving range, whereas a high intensity light may be indicating a high or full state of charge and/or driving range. Similarly, a low or high flashing frequency may be used to indicate either a low or a high state of charge and/or driving range. Also, the at least one light unit may comprise an area that it may illuminate, e.g., by using several light-emitting means. Only emitting light from, for example, half of the light-emitting means, may only illuminate half of the illuminable area. The corresponding illumination area may thus for example indicate the state of charge and/or driving range is at half of its maximum capacity. Also, the concept of different colors to indicate low state of charge and/or driving range may be used. For example, a red color may indicate low state of charge and/or driving range, a yellow or orange color may indicate medium state of charge and/or driving range, and a green color may indicate a high state of charge and/or driving range.

In an example, the at least one light unit may be configured to provide the indication of a proximity between an object and a vehicle door of the vehicle by emitting a light with an intensity, flashing frequency, illumination area and/or color correlating to the proximity state. Accordingly, a user may at least approximately become aware of the proximity of the vehicle door to the object by judging the intensity, flashing frequency, illumination area and/or color of the emitted light. For example, the intensity of the light may be low to high, with a low intensity light indicating a large distance or clearance between the vehicle door and object, whereas a high intensity light may be indicating a small distance between the vehicle door and object. Similarly, a low or high flashing frequency may be used to indicate either a small or large clearance between the vehicle door and the object. Also, the at least one light unit may comprise an area that it may illuminate, e.g., by using several light-emitting means. Only emitting light from, for example, half of the light-emitting means, may only illuminate half of the illuminable area. The corresponding illumination area may thus for example indicate that the vehicle door has been opened by half the distance it can be opened until it contacts the object. Also, the concept of different colors to indicate large or small clearance may be used. For example, a red color may indicate that the vehicle door is about to contact the object if opened much further, a yellow or orange color may indicate that the vehicle door is coming relatively close to the object, and a green color may indicate that there is much clearance and the vehicle door can be opened further without risk of contacting the object.

According to an example, the light unit may be configured to emit the same light associated with the first vehicle function and associated with the second vehicle function. Hence, the same light may advantageously be used for both vehicle functions. Still, they may easily be distinguished from one another by a user when the first vehicle function is during a driving state of the vehicle and the second vehicle function is during a stillstand state of the vehicle.

According to an example, the light unit (or generally the indication unit) may comprise a first mode, in which it may be configured to emit the light associated with the second vehicle function (or generally a first indication associated with the second vehicle function), and the light unit (or generally the indication unit) may comprise a second mode, in which it may be configured to emit the light associated with the first vehicle function (or generally a second indication associated with the first vehicle function), wherein the light unit (or generally the indication unit) is configured switchable between the first mode and the second mode. Accordingly, the vehicle functions are not in conflict with one another but selected based on the mode of the light unit.

According to an example, the light unit may be configured to switch to the first mode based on a first signal indicative of a stillstand state of the vehicle, wherein the light unit may be configured to switch to the second mode based on a second signal indicative of a driving state of the vehicle. The signals may be generated by, for example, an ignition or drive system of the vehicle, indicating whether the vehicle is in stillstand or being driven, for example. Hence, it may be ensured that the first vehicle function is only being used during the driving state of the vehicle, while the second vehicle function is only being used during the stillstand state, in particular parked and/or idling state, of the vehicle.

According to an example, the light unit may comprise one or more light-emitting diodes for emitting the light. In particular, the same light-emitting diodes or, alternatively, different light-emitting diodes may be used for emitting the light for indicating the different vehicle functions.

According to an example, the light unit may comprise one or more light-emitting means, the one or more light-emitting means being arranged in a mirror area of a mirror unit or in a display area of a display unit of the rear-view device such that the light is emitted at the mirror area or the display area. For example, the one or more light-emitting means may be one or more light-emitting diodes arranged at or behind the mirror area of the mirror unit or display area of the display unit. Also, in case of a display unit, the one or more light-emitting means may be configured as one or more light-emitting display areas.

According to an example, the light unit may be configured to emit a red light and/or a flashing light. Specifically, the red light and/or the flashing light may be intuitively associated with the anti-theft system, in particular in its activated state. Having a red flashing light in particular may be intuitively associated by a user and everyone else with an activated anti-theft system.

According to an example, the indication unit may be a display unit configured to display an indication of the situation in the environment of the vehicle and/or to display an indication of the second vehicle function (e.g., the activated state of the anti-theft system of the vehicle). Hence, instead or in addition to a mirror unit of the rear-view device, the rear-view device may use a display unit for the indication of one or both of the first and second vehicle function.

According to an example, the rear-view device may be an exterior rear-view device. The exterior rear-view device is particularly often observed the driver of the vehicle and also allows to view the indication of the second vehicle function from outside of the vehicle since it is on the exterior side of the vehicle. Thereby, it facilitates to conveniently provide indication of all vehicle functions as exemplary described herein.

According to a second aspect, there is provided a vehicle comprising the rear-view device of the first aspect of this disclosure.

The vehicle may for example be a car or truck. The vehicle may be equipped with any propulsion system, i.e., the vehicle may be an electric vehicle, internal combustion engine vehicle, fuel cell vehicle, and/or similar. Also, the vehicle may comprise two rear-view devices in the form of exterior rear-view devices, where at least one or both may be configured according to the first aspect of this disclosure, e.g., comprising an indication unit configured for a first vehicle function, the first vehicle function being to indicate a situation in an environment of the vehicle provided by a driver information system of the vehicle, wherein the indication unit is further configured for a second vehicle function different from the first vehicle function.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a view from inside of a cabin of a vehicle on an exterior rear-view device of the vehicle;
- Figures 2a-2d: show schematic illustrations of different operating conditions of an indication unit of the exterior rear-view device of Fig. 1;
- Figure 3: shows a schematic illustration of the vehicle of Fig. 1 with its components and systems;
- Figure 4: shows a schematic illustration of a dependency of the operation of the indication unit from a mode.

### DETAILED DESCRIPTION

The Figures are merely schematic representations and serve only to illustrate examples of the disclosure. Identical or equivalent elements are in principle provided with the same reference signs.

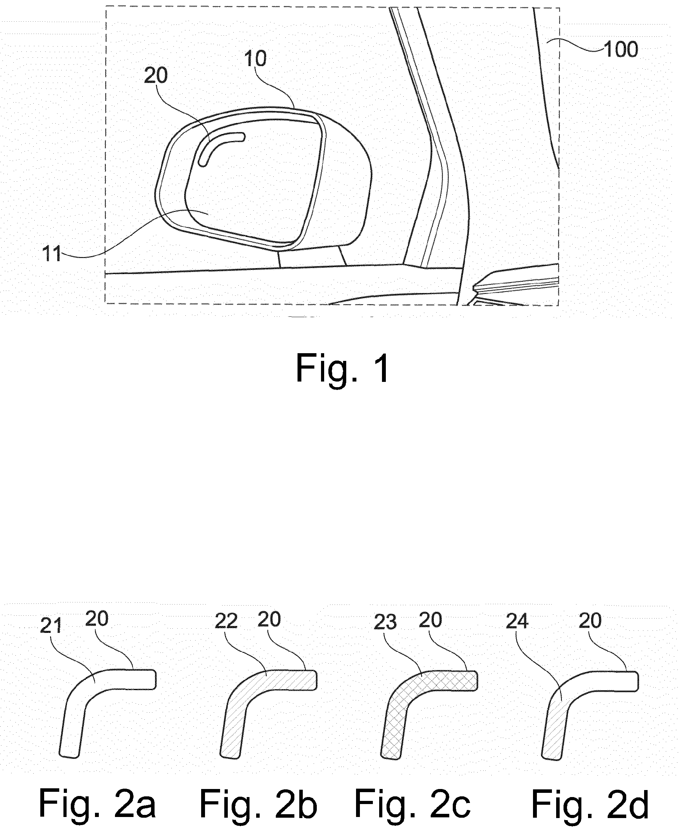

Figure 1 shows a view from inside of a cabin of a vehicle 100 onto a rear-view device 10 of the vehicle 100. In this example, the rear-view device 10 is exemplary shown as an exterior rear-view device 10. The exterior rear-view device 10 of this example is configured as an exterior rear-view mirror with a mirror area 11 of a mirror unit of the rear-view device 10. Alternatively, or additionally, a display area of a display unit may be provided on the rear-view device 10.

The rear-view device 10 comprises an indication unit 20. In this example, the indication unit 20 is exemplary configured as a light unit with one or more light-emitting means, e.g., light-emitting diodes, which is arranged in the mirror area 11 of the mirror unit of the rear-view device 10.

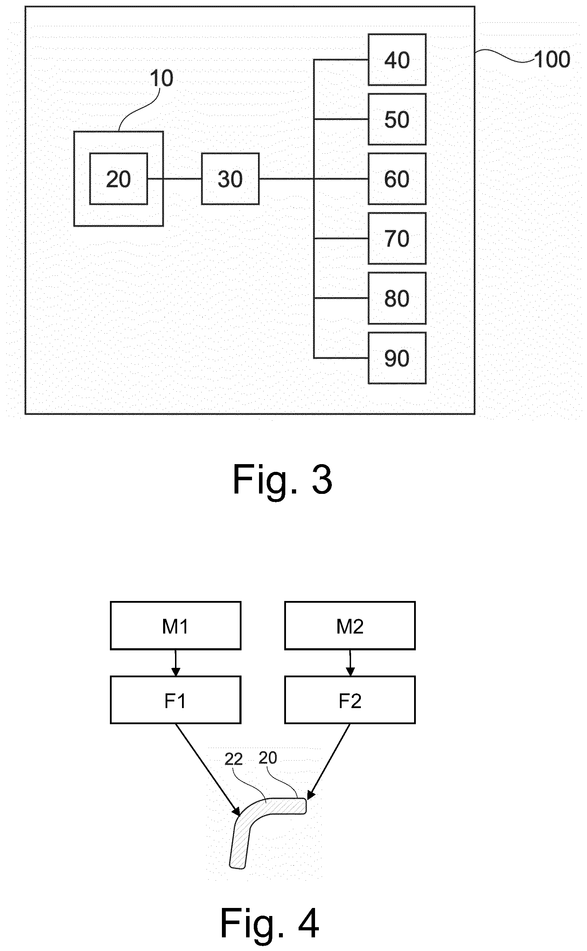

As shown in the various examples of Figures 2a, 2b, 2c, 2d, the indication unit 20 may be configured for various operating conditions 21, 22, 23, 24 depending on the indication of a certain vehicle function F 1, F2 (see Fig. 4) which shall be given to a user or driver of the vehicle 100.

Further, as shown in Figure 3, the vehicle 100 may have a variety of systems 40 to 90 connected to or as part of a control unit 30, which may be connected to the indication unit 20. Specifically, the control unit 30 and/or one or more of the systems 40 to 90 may at least partially or fully be provided as or by a microcontroller or computer of the vehicle 100, e.g., a central computer. Alternatively, some or multiple of the systems 40 to 90 may be provided or executed by separate computers or microcontrollers of the vehicle 100.

Specifically, the control unit 30 may be configured to control the indication unit 20 according to several vehicle functions from two or more of the vehicle systems 40 to 90.

For example, the indication unit 20 may be configured for a first vehicle function F 1, the first vehicle function F 1 being to indicate a situation in an environment of the vehicle 100 provided by a driver information system 40. Specifically, the driver information system 40 may be a blind spot information system. Accordingly, the indication unit 20 configured for the first vehicle function F1 may indicate that another road participant, e.g., another vehicle, is in a blind spot of the rear-view device 10. For example, in this case, the indication unit 20 as shown in Fig. 1 may be set from a first operating condition 21 as shown exemplary in Fig. 2a to a second operating condition 22 as shown exemplary in Fig. 2b. Specifically, in the first operating condition 21, the indication unit 20 may not emit any light or, in other words, be off. In the second operating condition 22, however, the indication unit 20 may be illuminated or, in other words, emit light to indicate the blind spot situation.

The first vehicle function F1 may be depending on a driving state of the vehicle 100. The driving state is an example of a first mode M1 in the schematic illustration of Fig 4. As shown in Fig. 4, when the first mode M1 is active, the first vehicle function F1 will be activated and used for the indication unit 20. In other words, the first vehicle function F1 may only be used or executed by the indication unit 20 to indicate a potential blind spot situation in case the vehicle 100 is driving. Otherwise, that first vehicle function F 1 may not be required, specifically during a standstill state of the vehicle 100, e.g., when the vehicle 100 is parked.

Still, the indication unit 20 may additionally be used for one or more further vehicle functions, specifically at least a second vehicle function F2, different from the first vehicle function F2. For example, the second vehicle function F2 may be that the indication unit 20 indicates an activated state including an activated alarm of an anti-theft system 50 of the vehicle 100. Other examples of a second vehicle function F2 or further vehicle functions include indication of a passenger location from a passenger detection system 60 of the vehicle 100, a state of charge indication of a battery system 70 of the vehicle 100, a driving range indication of a range determination system 80 of the vehicle 100, and/or a proximity indication between a static object and a vehicle door of the vehicle 100 from a proximity system 90 of the vehicle 100.

These one or more further vehicle functions may be depending on a standstill state of the vehicle 100 as a second mode M2, for example. In other words, the second and any further vehicle function may only be used or executed by the indication unit 20 to indicate a condition or state of any one of the exemplary systems 50 to 90 of the vehicle 100 in case the vehicle 100 is not driving. Otherwise, that second and any further vehicle function may not be required, specifically during a driving state of the vehicle 100. In the example of Fig. 4, the same indication or operating condition 22 is exemplarily being used for both vehicle functions F 1, F2. Due to the different context of the different modes M1, M2, users may still differentiate between the different vehicle functions F1, F2.

The control unit 30 may be configured to provide and/or receive a signal indicative of either a stillstand state of the vehicle 100 or a driving state of the vehicle 100 to the indication unit 20. Accordingly, the control unit 30 may, depending on such signal provided to the indication unit 20 and/or received at the control unit 30, control which one of the vehicle functions F 1, F2 is to be used for indication by the rear-view device 10.

The indication unit 20 exemplary configured as a light unit in Fig. 1 may be configured to emit the same light for the first vehicle function F 1 and the second vehicle function F2, e.g., using the first operating condition 21 of Fig. 2a and the second operating condition 22 of Fig. 2b. However, alternatively, different lights may be emitted by the indication unit 20. For example, instead of using the second operating condition 22 for the second vehicle function F2, the indication unit 20 may be using the third operating condition 23 shown in Fig. 2c, which may be having a different color of light, e.g., a red color. Therefore, even independent from the vehicle functions being used for different states of the vehicle 100, the user of the vehicle 100 may even better distinguish the indications of the different vehicle functions F 1, F2 from one another.

Moreover, the indication unit 20 may be configured for or with any other operating conditions, such as the fourth operating condition 24 exemplary shown in Fig. 2d. Here, the indication unit 20 is only partially activated or illuminated or only a part of its surface emits light compared to Figs. 2b and 2c. For example, this may be achieved when the indication unit 20 comprises several light-emitting diodes and only few but not all of these are being illuminated. For example, such partial illumination may be used to indicate the state of charge, driving range and/or proximity between the static object and vehicle door as discussed herein. Here, the illuminated area or surface of the indication unit 20 may correlate to the state of charge, driving range and/or proximity between the static object and vehicle door. Alternatively, or additionally, an illumination intensity, a flashing frequency, and/or similar may be correlating to the state of charge, driving range and/or proximity between the static object and vehicle door. Thereby, it is possible to not only indicate a state or condition of one of the systems 40 to 90 in a qualitative manner but also in a quantitative manner.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]".

Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

Any designation of methods, steps and elements as first, second, etc. or similar as provided herein is merely intended to make the methods, their steps and elements referenceable and distinguishable from one another. By no means does the designation of methods, steps and elements constitute a limitation of the scope of this disclosure. For example, when this disclosure describes a third element, a first or second element do not need to be present unless they are explicitly referred to as being required. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the examples of the disclosure described herein are capable of operation in other sequences than described or illustrated herein.

Any reference signs in the claims should not be construed as limiting the scope of the claims.

### LIST OF REFERENCE SIGNS

- 10: rear-view device
- 11: mirror area
- 20: indication unit
- 21: first operating condition
- 22: second operating condition
- 23: third operating condition
- 24: fourth operating condition
- 30: control unit
- 40: driver information system
- 50: anti-theft system
- 60: passenger detection system
- 70: battery management system
- 80: range determination system
- 90: proximity system
- 100: vehicle
- F1: first vehicle function
- F2: second vehicle function
- M1: first mode
- M2: second mode

## Claims

1. A rear-view device (10) for a vehicle (100), the rear-view device (10) comprising an indication unit (20) configured for a first vehicle function (F 1), the first vehicle function (F1) being to indicate a situation in an environment of the vehicle (100) provided by a driver information system (40) of the vehicle (100), wherein the indication unit (20) is further configured for a second vehicle function (F2) different from the first vehicle function (F 1).

2. The rear-view device (10) of claim 1, wherein the driver information system (40) is a blind spot information system, and the indicated situation of the first vehicle function is that another road participant is in a blind spot of the rear-view device (10).

3. The rear-view device (10) of claim 1 or 2, wherein the second vehicle function (F2) is to indicate an activated state of an anti-theft system (50) of the vehicle (100).

4. The rear-view device (10) of claim 3, wherein the activated state of the anti-theft system (50) includes an activated alarm of the anti-theft system (50), and wherein the indication unit (20) is configured to indicate the activated state of the anti-theft system (50) when one or more doors of the vehicle (100) are locked.

5. The rear-view device (10) of any one of the previous claims, wherein the second vehicle function (F2) or a third vehicle function for which the indication unit (20) is configured is to indicate one or more of:
a passenger location from a passenger detection system (60) of the vehicle (100);
a state of charge of a battery system (70) of the vehicle (100);
a driving range of the vehicle (100); or
a proximity between an object and a vehicle door of the vehicle (100).

6. The rear-view device (10) of any one of the previous claims, wherein the indication unit (20) is a light unit configured to emit a light associated with the first vehicle function (F1) and/or to emit a light associated with the second vehicle function (F2).

7. The rear-view device (10) of claim 6, wherein the light unit is configured to emit the same light associated with the first vehicle function (F1) and associated with the second vehicle function (F2).

8. The rear-view device (10) of claim 6 or 7, wherein the light unit comprises a first mode (M1), in which it is configured to emit the light associated with the second vehicle function (F2), and wherein the light unit comprises a second mode (M2), in which it is configured to emit the light associated with the first vehicle function (F1), wherein the light unit is configured switchable between the first mode (M1) and the second mode (M2).

9. The rear-view device (10) of claim 8, wherein the light unit is configured to switch to the first mode (M1) based on a first signal indicative of a stillstand state of the vehicle (100), and wherein the light unit is configured to switch to the second mode (M2) based on a second signal indicative of a driving state of the vehicle (100).

10. The rear-view device (10) of any one of claims 6 to 9, wherein the light unit comprises one or more light-emitting diodes for emitting the light.

11. The rear-view device (10) of any one of claims 6 to 10, wherein the light unit comprises one or more light-emitting means, the one or more light-emitting means being arranged in a mirror area (11) of a mirror unit or in a display area of a display unit of the rear-view device (10) such that the light is emitted at the mirror area (11) or the display area.

12. The rear-view device (10) of any one of claims 6 to 11, wherein the light unit is configured to emit a red light and/or a flashing light.

13. The rear-view device (10) of any one of claims 1 to 5, wherein the indication unit (20) is a display unit configured to display an indication of the situation in the environment of the vehicle and/or to display an indication of the second vehicle function (F2).

14. The rear-view device (10) of any one of the previous claims, wherein the rear-view device (10) is an exterior rear-view device.

15. A vehicle (100) comprising the rear-view device (10) of any one of the previous claims.

## Amended claims

### Amended claims in accordance with Rule 137(2) EPC.

1. A rear-view device (10) for a vehicle (100), the rear-view device (10) comprising an indication unit (20) configured for a first vehicle function (F1), the first vehicle function (F1) being to indicate a situation in an environment of the vehicle (100) provided by a driver information system (40) of the vehicle (100), wherein the indication unit (20) is further configured for a second vehicle function (F2) different from the first vehicle function (F1), wherein the indication unit (20) is a light unit configured to emit a light associated with the first vehicle function (F1) and to emit a light associated with the second vehicle function (F2), wherein the light unit comprises one or more light-emitting diodes for emitting the light, and wherein the same one or more light-emitting diodes are used for emitting the light for indicating the different vehicle functions.

2. The rear-view device (10) of claim 1, wherein the driver information system (40) is a blind spot information system, and the indicated situation of the first vehicle function is that another road participant is in a blind spot of the rear-view device (10).

3. The rear-view device (10) of claim 1 or 2, wherein the second vehicle function (F2) is to indicate an activated state of an anti-theft system (50) of the vehicle (100).

4. The rear-view device (10) of claim 3, wherein the activated state of the anti-theft system (50) includes an activated alarm of the anti-theft system (50), and wherein the indication unit (20) is configured to indicate the activated state of the anti-theft system (50) when one or more doors of the vehicle (100) are locked.

5. The rear-view device (10) of any one of the previous claims, wherein the second vehicle function (F2) or a third vehicle function for which the indication unit (20) is configured is to indicate one or more of:
a passenger location from a passenger detection system (60) of the vehicle (100);
a state of charge of a battery system (70) of the vehicle (100);
a driving range of the vehicle (100); or
a proximity between an object and a vehicle door of the vehicle (100).

6. The rear-view device (10) of any one of the previous claims, wherein the light unit is configured to emit the same light associated with the first vehicle function (F1) and associated with the second vehicle function (F2).

7. The rear-view device (10) of any one of the previous claims, wherein the light unit comprises a first mode (M1), in which it is configured to emit the light associated with the second vehicle function (F2), and wherein the light unit comprises a second mode (M2), in which it is configured to emit the light associated with the first vehicle function (F1), wherein the light unit is configured switchable between the first mode (M1) and the second mode (M2).

8. The rear-view device (10) of claim 7, wherein the light unit is configured to switch to the first mode (M1) based on a first signal indicative of a stillstand state of the vehicle (100), and wherein the light unit is configured to switch to the second mode (M2) based on a second signal indicative of a driving state of the vehicle (100).

9. The rear-view device (10) of any one of the previous claims, wherein the light unit comprises one or more light-emitting means, the one or more light-emitting means being arranged in a mirror area (11) of a mirror unit or in a display area of a display unit of the rear-view device (10) such that the light is emitted at the mirror area (11) or the display area.

10. The rear-view device (10) of any one of the previous claims, wherein the light unit is configured to emit a red light and/or a flashing light.

11. The rear-view device (10) of any one of the previous claims, wherein the rear-view device (10) is an exterior rear-view device.

12. A vehicle (100) comprising the rear-view device (10) of any one of the previous claims.
